(19) Europäisches Patentamt
European Patent Office
Office européen des brevets

(11) EP 0 690 062 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.6: **C07F 7/08**, C07F 7/18, C08G 77/14, C08G 77/38, C09D 183/06

(21) Anmeldenummer: **95109672.6**

(22) Anmeldetag: **22.06.1995**

(54) **Furanylgruppen aufweisende Organosiliciumverbindungen**

Organosilicon compounds having furanyl groups

Composés organosiliciques ayant des groupes furannyle

(84) Benannte Vertragsstaaten:
**AT BE CH DE ES FR GB IT LI NL SE**

(30) Priorität: **29.06.1994 DE 4422833**

(43) Veröffentlichungstag der Anmeldung:
**03.01.1996 Patentblatt 1996/01**

(73) Patentinhaber: **Wacker-Chemie GmbH**
**81737 München (DE)**

(72) Erfinder:
- **Herzig, Christian, Dr.**
  **D-83373 Taching am See (DE)**
- **Deubzer, Bernward, Dr.**
  **D-84489 Burghausen (DE)**
- **Blöchl, Martina**
  **D-84375 Tann (DE)**
- **Seeger-Feichtinger, Inge**
  **D-94166 Stubenberg (DE)**

(74) Vertreter: **Deffner-Lehner, Maria et al**
**Wacker-Chemie GmbH,**
**Hanns-Seidel-Platz 4**
**81737 München (DE)**

(56) Entgegenhaltungen:
**EP-A- 0 508 491** **GB-A- 2 093 855**
**US-A- 4 656 235**

- **CHEMICAL ABSTRACTS, vol. 64, no. 3, 31. Januar 1966, Columbus, Ohio, US; abstract no. 3584b, & KHIM. GETEROTSIKL. SOEDIN., AKAD. NAUK LATV. SSR, Nr.4, 1965 Seiten 490 - 498 E. LUKEVICS ET AL.**
- **CHEMICAL ABSTRACTS, vol. 123, no. 8, 21. August 1995, Columbus, Ohio, US; abstract no. 84703, & IZV. AKAD. NAUK, SER. KHIM., Nr.5, 1993 Seiten 949 - 952 N.G. SENCHENYA ET AL.**
- **DATABASE WPI Week 6800, Derwent Publications Ltd., London, GB; AN 68-26542Q & SU-A-208 948 (LUKEVITS E YA)**
- **EUROPEAN POLYMER JOURNAL, Bd.24, Nr.7, 1988, OXFORD GB Seiten 639 - 645 R. MERCIER ET AL.**
- **JOURNAL OF ORGANIC CHEMISTRY, Bd.32, Nr.9, September 1967, EASTON US Seiten 2841 - 2845 W.C.HAMMANN ET AL.**
- **CHEMICAL ABSTRACTS, vol. 69, no. 10, 2. September 1968, Columbus, Ohio, US; abstract no. 36511f, & PLAST. MASSY, Nr.6, 1968 Seiten 40 - 42 L.M. PRUTKOV ET AL.**
- **CHEMICAL ABSTRACTS, vol. 97, no. 26, 27. Dezember 1982, Columbus, Ohio, US; abstract no. 217152, & VOPR. KHIM. KHIM. TEKHNOL., Bd.64, 1981 Seiten 52 - 59 YU.V. SVETKIN ET AL.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Furanylgruppen aufweisende Organosiliciumverbindungen, Verfahren zu deren Herstellung, vernetzbare Zusammensetzungen, die diese Furanylgruppen aufweisenden Organosiliciumverbindungen enthalten sowie daraus hergestellte vernetzte Beschichtungen.

Aus Furfurylalkohol und Alkoxysilanen werden nach Thoru Takaya, Japan 5566('57) vom 26. Juli, Furfuryloxysilane hergestellt, die aufgrund ihrer Si-O-C-Struktur nicht feuchtigkeitsstabil sind und den Furanring vom Si-Atom leicht abspalten. Es ist bekannt, daß solche Furfuryloxysilane mit Säuren in mehreren Stunden bei Temperaturen über 60°C flexible Beschichtungen ergeben. Hierzu sei beispielsweise auf Susumu Takatani, Japan 4094('58) vom 24. Mai, verwiesen. Stabilität gegenüber Umwelteinflüssen und trotzdem sekundenschnelle Aushärtung ist im allgemeinen nicht gegeben.

Gemäß Hammann et al J. Org. Chem. 32, 2841-2 (1967) werden direkt an Si-Atome gebundene Furanringe durch Säurespuren in der Wärme leicht abgespalten.

Furanylsubstituierte Silane lassen sich auch durch Hydrosilylierung herstellen. Beispielsweise addierten Lukevics and Voronkov, Chemical Abstracts 64, 1966, 3584 unter Platinkatalyse Hydrogensilane an 2-Vinylfuran.

Furanylgruppen aufweisende Organosiliciumverbindungen mit mindestens einer Si-O-Si-Gurppierung sind weiterhin aus GB-A 2093855, US-A 4,656,235, Chemical Abstracts 69:36511f, Chemical Abstracts 123:84703 und Chemical Abstracts 97:217152 bekannt.

In Eur. Polym. J., vol. 24, no. 7, 1988, 639-645 und Database WPI AN 68-26542Q sind Organosiliciumverbindungen mit einem Si-gebundenen Furanylrest der Formel

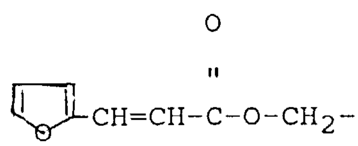

beschrieben. Diese Verbindungen gehen aufgrund der konjungierten Doppelbindung im Furanylrest bei UV-Bestrahlung eine [2+2] Cycloaddition ein.

In EP-A 508 491 sind (Meth)acryloxygruppen aufweisende Organosiliciumverbindungen beschrieben, die durch Bestrahlung mit Licht radikalisch vernetzen.

Gegenstand der Erfindung sind Furanylgruppen aufweisende Organosiliciumverbindungen, die Einheiten der allgemeinen Formel

$$A_cR_aSi(OR^1)_bO_{\frac{4-a-b-c}{2}} \qquad (I)$$

enthalten, wobei

R gleich oder verschieden sein kann und Wasserstoffatom oder einwertiger, SiC-gebundener, gegebenenfalls halogenierter Kohlenwasserstoffrest mit 1 bis 26 Kohlenstoffatomen ausgewählt aus der Gruppe der Alkylreste, Cycloalkylreste, Arylreste, Alkarylreste, Aralkylreste, Halogenalkylreste und Halogenarylreste der durch 1 bis 12 separate Sauerstoffatome unterbrochen sein kann, bedeutet,

$R^1$ gleich oder verschieden sein kann und einen Kohlenwasserstoffrest mit 1 bis 8 Kohlenstoffatomen, der durch 1 bis 3 Sauerstoffatome unterbrochen sein kann, bedeutet,

A gleich oder verschieden sein kann und SiC-gebundener Furanylrest der allgemeinen Formel

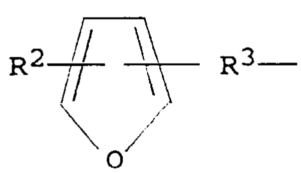

(II)

bedeutet, wobei $R^2$ Wasserstoff oder einen einwertigen, aliphatisch gesättigten, gegebenenfalls halogenierten Kohlenwasserstoffrest mit 1 bis 26 Kohlenstoffatomen, der durch 1 bis 12 separate Sauerstoffatome unterbrochen

sein kann, bedeutet und

$R^3$ Reste der Formel ausgewählt aus der Gruppe der Formeln $*-CH_2OCH_2CH_2-$, $*-CH_2O(CH_2)_3-$, $*-CH_2O(CH_2)_6-$, $*-CH_2O(C_2H_4O)_n(CH_2)_3-$ (n=1-10), $*-CH_2O(C_3H_6O)_n(CH_2)_3-$ (n=1-10),

$$*-CH_2OC(=O)(CH_2)_2-, \quad *-CH_2OC(=O)O(CH_2)_3-,$$

$$*-CH_2O(C_2H_4O)_{n'}C(=O)(CH_2)_2- \quad (n'=1-5),$$

$$*-CH_2O(C_2H_4O)_{n'}C(=O)O(CH_2)_3- \quad (n'=1-5),$$

$*-CH_2OCH(CH_3)-O(C_2H_4O)_n(CH_2)_m-$ (n=1-10, m = 2 oder 3) und $*-CH_2OCH(C_2H_5)-O(C_2H_4O)_n(CH_2)_m-$ (n=1-10, m = 2 oder 3),

wobei jeweils die mit * markierte Seite des Restes mit dem Furanring verbunden ist, sind,

a 0, 1, 2 oder 3 ist,
b 0, 1 oder 2 ist und
c 0, 1 oder 2 ist,

mit der Maßgabe, daß die Summe a+b+c kleiner oder gleich 3 ist und die erfindungsgemäße Organosiliciumverbindung pro Molekül mindestens einen Rest A aufweist.

Besonders bevorzugt handelt es sich bei Rest R um den Methyl-, Ethyl- und Phenylrest.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptylreste und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beipiele für Reste $R^1$ sind die für Rest R angegebenen Kohlenwasserstoffreste mit 1 bis 8 Kohlenstoffatomen sowie der 2-Methoxyethylrest.

Bevorzugt handelt es sich bei Rest $R^1$ um den Methyl-, Ethyl- und Butylrest, wobei der Methyl- und Ethylrest besonders bevorzugt sind.

Der bevorzugte Wert für c ist 0 oder 1.

Rest $R^2$ hat bevorzugt die Bedeutung von Wasserstoffatom.

Besonders bevorzugt handelt es sich bei Rest $R^2$ um $*-CH_2O(CH_2)_3-$ und $*-CH_2O(C_2H_4O)_n(CH_2)_3-$ mit n gleich 1 bis 5, wobei jeweils die mit * markierte Seite des Restes mit dem Furanring verbunden ist.

Bevorzugt handelt es sich bei Rest A um
$Z-CH_2OCH_2CH_2-$, $Z-CH_2O(CH_2)_3-$, $Z-CH_2O(C_2H_4O)_n(CH_2)_3-$ und $Z-CH_2O(C_3H_6O)_n(CH_2)_3-$ mit n jeweils gleich 1 bis 5, wobei Z gleich

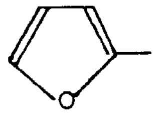

ist.

Bei den erfindungsgemäßen Furanylgruppen aufweisenden Organosiliciumverbindungen kann es sich nun um solche handeln, die ausschließlich aus Einheiten der Formel (I) bestehen, oder um Ccpolymere aus Siloxaneinheiten der Formel (I) und organischen Einheiten oder Blöcken von Einheiten, welche mindestens zwei Si-Atome miteinander chemisch verbinden. Die reinen Organobestandteile solcher Siloxan-Organo-Copolymeren sind bevorzugt lineare oder verzweigte Kohlenwasserstoffreste oder auch sauerstoffhaltige Reste, bevorzugt als Polyetherreste. In diesen Copolymeren sind die Siloxanblöcke mit den Organoeinheiten bzw. -blöcken über die Gruppe Si-O-C oder Si-C, bevorzugt aber über Si-C, verbunden. Organische Polyetherbrücken in diesen Copolymeren eignen sich insbesondere zur Steuerung der Polarität der erfindungsgemäßen Furanylsiliciumverbindungen.

Besonders bevorzugt handelt es sich bei den erfindungsgemäßen Furanylgruppen aufweisenden Organosiliciumverbindungen um solche der Formel

$$A_dR_{3-d}SiO(SiR_2O)_o(SiRAO)_pSiR_{3-d}A_d \qquad \text{(III)},$$

wobei

A die oben dafür angegebene Bedeutung hat,
R die in Formel (I) dafür angegebene Bedeutung hat ausgenommen Wasserstoffatom,
d gleich oder verschieden sein kann und 0 oder 1 ist,
o eine ganze Zahl von 1 bis 1000 ist und
p 0 oder eine ganze Zahl von 1 bis 100 bedeutet,

mit der Maßgabe, daß die Organosiliciumverbindung der Formel (III) pro Molekül mindestens einen Rest A aufweist.

Im Rahmen dieser Erfindung soll Formel (III) so verstanden werden, daß o Einheiten -($SiR_2O$)- und p Einheiten -(SiARO)- in beliebiger Weise im Organosiloxanmolekül verteilt sein können.

Beispiele für die erfindungsgemäßen Furanylgruppen aufweisenden Organosiliciumverbindungen sind Copolymere aus Trimethylsiloxy-, Dimethylsiloxy- und 3-Furfuryloxypropyl-methylsiloxyeinheiten, Copolymere aus 3-Furfuryloxypropyl-dimethylsiloxy-, 3-Furfuryloxypropyl-methylsiloxy- und Dimethylsiloxyeinheiten, Copolymere aus Trimethylsiloxy-, Dimethylsiloxy- und 3-(ω-Furfuryl-oligo-ethylenoxy-)propyl-methylsiloxyeinheiten, Copolymere aus Trimethylsiloxy- und 2-Furylethyleinheiten sowie cyclische Siloxane aus 3-(ω-Furfuryloligo-ethylenoxy-)propyl-methylsiloxyeinheiten.

Die erfindungsgemäßen Furanylgruppen aufweisenden Organosiliciumverbindungen haben bei 25°C vorzugsweise eine Viskosität von 20 bis 5000 $mm^2/s$, besonders bevorzugt 100 bis 1000 $mm^2/s$.

Ein weiterer Gegenstand der vorliegenden Erfindung ist ein Verfahren zur Herstellung von Furanylgruppen aufweisenden Organosiliciumverbindungen, dadurch gekennzeichnet, daß eine Furanylverbindung (1) der Formel

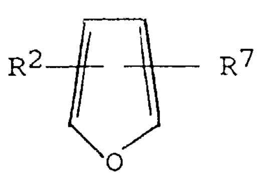

(VII)

worin $R^2$ die oben dafür angegebene Bedeutung hat und $R^7$ einen einwertigen Kohlenwasserstoffrest mit endständiger Kohlenstoff-Kohlenstoff-Mehrfachbindung der Formel ausgewählt aus der Gruppe der Formeln $-CH_2OCH=CH_2$, $-CH_2OCH_2CH=CH_2$, $-CH_2O(CH_2)_4CH=CH_2$, $-CH_2O(C_2H_4O)_nCH_2CH=CH_2$ (n=1-10), $-CH_2O(C_3H_6O)_nCH_2CH=CH_2$ (n=1-10),

$$-CH_2O\overset{O}{\overset{\|}{C}}CH=CH_2,\quad -CH_2O\overset{O}{\overset{\|}{C}}OCH_2CH=CH_2,$$

$$-CH_2O(C_2H_4O)_{n'}\overset{O}{\overset{\|}{C}}CH=CH_2\ (n'=1-5),$$

$$-CH_2O(C_2H_4O)_{n'}\overset{O}{\overset{\|}{C}}OCH_2CH=CH_2\ (n'=1-5),$$

$-CH_2OCH(CH_3)-O(C_2H_4O)_nCH=CH_2$ (n=1-10, m = 2 oder 3) und - $CH_2OCH(C_2H_5)-O(C_2H_4O)_nCH=CH_2$ (n=1-10, m = 2 oder 3),
bedeutet, mit Organosiliciumverbindung (2), die Einheiten der allgemeinen Formel

$$H_cR_aSi(OR^1)_bO_{\frac{4-a-b-c}{2}} \qquad (IV)$$

enthält, wobei

R die in Formel (I) dafür angegebene Bedeutung hat ausgenommen Wasserstoffatom,
$R^1$, a, b und c die oben dafür angegebenen Bedeutungen haben, mit der Maßgabe, daß die Summe a+b+c kleiner oder gleich 3 ist und die Organosiliciumverbindung (2) pro Molekül mindestens ein Si-gebundenes Wasserstoffatom aufweist, umgesetzt wird.

Beispiele für die erfindungsgemäß eingesetzten Furanylverbindungen (1) sind $Z-CH_2OCH=CH_2$, $Z-CH_2OCH_2CH=CH_2$, $Z-CH_2O(C_2H_4O)_nCH_2CH=CH_2$ und $Z-CH_2O(C_3H_6O)_nCH_2CH=CH_2$ mit n jeweils gleich 1 bis 5 und Z gleich

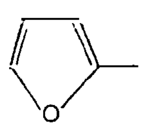
.

Verfahren zur Herstellung der Furanylverbindungen (1) sind in der organischen Chemie allgemein bekannt.

Bei den erfindungsgemäß eingesetzten Organosiliciumverbindungen (2) kann es sich um bisher bekannte lineare, verzweigte oder cyclische Organosiliciumverbindungen mit mindestens einem Si-gebundenen Wasserstoffatom handeln.

Besonders bevorzugt handelt es sich bei den erfindungsgemäß eingesetzten Organosilicumverbindungen (2) um solche der Formel

$$H_dR_{3-d}SiO(SiR_2O)_o(SiRHO)_pSiR_{3-d}H_d \qquad (V),$$

wobei

R die in Formel (I) dafür angegebene Bedeutung hat ausgenommen Wasserstoffatom,
d, o und p eine der oben dafür angegebenen Bedeutungen hat,

mit der Maßgabe, daß die Organosiliciumverbindung der Formel (III) pro Molekül mindestens ein Si-gebundenes Wasserstoffatom aufweist.

Im Rahmen dieser Erfindung soll Formel (V) so verstanden werden, daß o Einheiten -($SiR_2O$)- und p Einheiten -(SiHRO)- in beliebiger Weise im Organosiloxanmolekül verteilt sein können.

Der Gehalt an Si-gebundenem Wasserstoff beträgt in der Organosiliciumverbindung (2) vorzugsweise 0,02 bis 1,60 Gewichtsprozent.

Die erfindungsgemäß eingesetzten Organosiliciumverbindungen (2) haben bei 25°C vorzugsweise eine Viskosität von 0,5 bis 20 000 $mm^2/s$, besonders bevorzugt 10 bis 1 000 $mm^2/s$.

Besonders bevorzugt enthalten die bei dem erfindungsgemäßen Verfahren eingesetzten Organosiliciumverbindungen (2) 2 bis 20 Si-gebundene Wasserstoffatome je Molekül.

Bevorzugte Beispiele für Organopolysiloxane der Formel (V) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von Organosiliciumverbindungen mit mindestens einem Si-gebundenen Wasserstoffatom je Molekül, auch von solchen der bevorzugten Art, sind allgemein bekannt.

Bei dem erfindungsgemäßen Verfahren wird Organosiliciumverbindung (2) in einer Menge von vorzugsweise 0,5 bis 1,5 Si-H-Gruppen, besonders bevorzugt 0,7 bis 1,1 Si-H-Gruppen, jeweils bezogen auf eine endständige aliphatische Kohlenstoff-Kohlenstoff-Mehrfachbindung der Furanylverbindung (1), eingesetzt.

Die Herstellung der erfindungsgemäßen Furanylgruppen aufweisenden Organosiliciumverbindungen aus Furanylverbindung (1) und Si-gebundenen Wasserstoff aufweisenden Organosiliciumverbindung (2) erfolgt bevorzugt unter Verwendung von die Anlagerung von Si-gebundenem Wasserstoff an endständige, aliphatische Kohlenstoff-Kohlenstoff-Mehrfachbindung fördernden Katalysatoren (3).

Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten.

Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen und Komplexe von Platin, wie Platinhalogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-($\gamma$-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, und Ammonium-Platinkomplexe gemäß EP-B 110 370, und Verbindungen und Komplexe von Rhodium, wie die Rhodiumkomplexe gemäß EP-A 476 426.

Der Katalysator (3) wird vorzugsweise in Mengen von 2 bis 1000 Gew.-ppm (Gewichtsteilen je Million Gewichtsteilen), bevorzugt in Mengen von 10 bis 50 Gew.-ppm, jeweils berechnet als elementares Platin und bezogen auf das Gesamtgewicht von Furanylverbindung (1) und Organosiliciumverbindung (2), eingesetzt.

Das erfindungsgemäße Verfahren wird vorzugsweise beim Druck der umgebenden Atmosphäre, also etwa bei 900 bis 1100 hPa, durchgeführt; es kann aber auch bei höheren oder niedrigeren Drücken durchgeführt werden. Ferner wird das erfindungsgemäße Verfahren vorzugsweise bei einer Temperatur von 50°C bis 170°C, bevorzugt 80°C bis 150°C, durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Furanylgruppen aufweisenden Organosiliciumverbindungen wird vorzugsweise überschüssige Furanylverbindung (1) sowie gegebenenfalls mitverwendetes inertes organisches Lösungsmittel destillativ entfernt.

Bei dem erfindungsgemäßen Verfahren können als Nebenprodukte polycyclische Derivate aus den Furanylverbindungen (1) entstehen. Bekannt ist beispielsweise die Bildung von 7-Oxatri-cyclen sowie 7,9-Dioxatricyclo-[2.2.1.3]-dec-2-en aus der Reaktion des Furanylrings mit einer sonstigen Mehrfachbindung in Verbindung (1) im Sinne einer [2+4]-Cycloaddition. Hierzu sei beispielsweise auf CA 113; 191204 d verwiesen. Die verbleibenden Doppelbindungen können im so entstandenen Ringsystem gegenüber Si-gebundenem Wasserstoff der Verbindung (2) unter den erfindungsgemäßen Bedingungen reaktiv sein, so daß die erfindungsgemäßen Furanylgruppen aufweisenden Organosiliciumverbindungen in geringen Mengen Einheiten der genannten Art enthalten können.

Das erfindungsgemäße Verfahren hat den Vorteil, daß die Herstellung von kationisch rasch vernetzbaren Siliciumverbindungen auf einfache Art und Weise erfolgt und nachwachsende Ausgangsstoffe, wie z.B. Furfurylalkohol, verwendet werden können, die den eigentlich reaktiven Bestandteil bilden. Im Vergleich zu Vinylethern ist eine Abspaltung der reaktiven Gruppe vom Si-haltigen Polymer bzw. Oligomer unter hydrolytisch sauren Bedingungen im allgemeinen nicht möglich, womit ein Verlust reaktiver Gruppen hinsichtlich Hydrolyse unmöglich ist.

Die erfindungsgemäßen Furanylgruppen aufweisenden Organosiliciumverbindungen sind kationisch vernetzbar, beispielsweise durch Zugabe von Säuren, wie Salzsäuren, Schwefelsäuren oder p-Toluolsulfonsäuren. Sie werden vorzugsweise in einer durch Licht initiierten, kationischen Polymerisation vernetzt. Als Katalysatoren für die durch Licht initiierte Vernetzung werden vorzugsweise Oniumsalze, wie Diaryljodoniumsalze oder Triarylsulfoniumsalze, verwendet, die aus EP-B 105 341 und DE 41 42 327 A bekannt sind. Beispiele für solche Oniumsalze sind die in EP-B 105 341 beschriebenen Bis-(dodecylphenyl)-iodoniumsalze, wie Bis-(dodecylphenyl)iodoniumhexafluoroantimonat oder Bis-(dodecylphenyl)iodoniumhexafluoroarsenat oder die in DE 41 42 327 A beschriebenen Jodoniumsalze der Formel

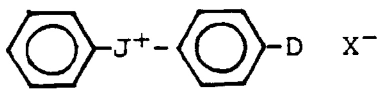 (VI),

wobei D ein Rest der Formel

$$-O-R^4-SiR^5_3$$

bedeutet, worin

- $R^4$ einen zweiwertigen Kohlenwasserstoffrest mit 1 bis 18 Kohlenstoffatomen, der gegebenfalls durch mindestens ein Sauerstoffatom und/oder ein Schwefelatom und/oder eine Carboxylgruppe unterbrochen ist,
- $R^5$ einen einwertigen Kohlenwasserstoffrest mit 1 bis 18 Kohlenstoffatomen, der gegebenenfalls durch mindestens ein Sauerstoffatom unterbrochen ist, und
- $X^-$ ein Tosylatanion oder ein schwach nukleophiles oder nicht nukleophiles Anion $Y^-$, ausgewählt aus der Gruppe von $CF_3CO_2^-$, $BF_4^-$, $PF_6^-$, $AsF_6^-$, $SbF_6^-$, $ClO_4^-$, $HSO_4^-$, $CF_3SO_3^-$ und $C_4F_9SO_3^-$, bedeutet.

Ein weiterer Gegenstand der Erfindung sind daher durch Licht vernetzbare Zusammensetzungen, enthaltend

(A) Furanylgruppen aufweisende Organosiliciumverbindungen, die Einheiten der Formel (I) enthalten und
(B) Oniumsalze ausgewählt aus der Gruppe der Diceryljodoniumsalze und Triarylsulfoniumsalze.

Vorzugsweise werden die erfindungsgemäßen Furanylgruppen aufweisenden Organosiliciumverbindungen durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet. Die erfindungsgemäßen Furanylgruppen aufweisenden Organosiliciumverbindungen können auch durch Licht im sichtbaren Bereich vernetzt werden, wenn handelsübliche Photosensibilisatoren, wie beispielsweise 2-Chlorthioxanthon, 2-Isopropylthioxanthon, Anthracen, Perylen und Phenothiazin, mitverwendet werden.

Die kationische Polymerisation der erfindungsgemäßen Furanylgruppen aufweisenden Organosiliciumverbindungen kann natürlich auch durch dafür übliche Brönsted- oder Lewissäuren eingeleitet werden.

Die erfindungsgemäße Vernetzung wird vorzugsweise bei einer Temperatur von 20 bis 60°C und einem Druck von 900 bis 1100 hPa durchgefürt.

Die erfindungsgemäßen Furanylgruppen aufweisenden Organosiliciumverbindungen sowie die erfindungsgemäßen Zusammensetzungen haben den Vorteil, daß während der Lagerung und Verarbeitung der erfindungsgemäßen Furanylgruppen aufweisenden Organosilciumverbindungen bzw. der diese Verbindungen enthaltenden erfindungsgemäßen Zusammensetzungen keine Abspaltung von reaktiven Gruppen und deren Umwandlung in nicht reaktive Komponenten durch Feuchtigkeit beobachtet wird.

Gegenstand der Erfindung ist schließlich auch ein Verfahren zur Herstellung von Überzügen, dadurch gekennzeichnet, daß die erfindungsgemäßen durch Licht vernetzbaren Zusammensetzungen auf eine Oberfläche aufgebracht und vernetzen gelassen werden.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Furanylgruppen aufweisenden Organosiliciumverbindungen auf die zu überziehenden Oberflächen kann in beliebiger, für die Herstellung von Überzügen aus flüssigen Stoffen geeigneter und vielfach bekannter Weise erfolgen.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im folgenden beziehen sich alle Viskositätsangaben auf eine Temperatur von 25°C.

**A) Herstellung von Allylfurfurylether**

800 g 50 %ige Natronlauge werden bei 45°C nacheinander mit 14 g Benzyltrimethylammoniumchlorid und 490 g Furfurylalkohol versetzt. 425 g Allylchlorid werden über einen Zeitraum von ca. einer Stunde zugetropft, wobei sich das Reaktionsgemisch langsam erwärmt und später unter Rückfluß siedet. Man läßt eine weitere Stunde bei ca. 80°C Sumpftemperatur ausreagieren, gibt 100 ml Cyclohexan und 700 ml Wasser hinzu. Die Salzphase wird abgetrennt, die organische Phase 3 mal mit je 200 ml Wasser gewaschen und danach durch azeotrope Destillation von Wasser befreit. Das Rohprodukt wird über eine kurze Kolonne fraktioniert, wobei man bei 69-70°C/13 hPa 548 g ca. 96 %-igen Allylfurfurylether erhält, dessen Struktur durch das $^1$H-NMR-Spektrum belegt wird (Furfurylsignale bei $\delta$ = 7,39; 6,33; 6,31; 4,45 ppm). Die restlichen 4 % bestehen aus Dioxatricyclodecen als internem Cycloadditionsprodukt aus der Titelverbindung.

**B) Herstellung von Polyethylenglycolallylfurfurylether**

Man vermischt unter intensivem Rühren der Reihe nach 600 g NaOH mit 600 ml Wasser sowie 14 g Benzyltrimethylammoniumchlorid und 1170 g ethoxyliertem Furfurylalkohol (Ethoxylierungsgrad 3,1). Bei 70°C dosiert man insgesamt 450 g Allylchlorid zu, wobei sich das Reaktionsgemisch stetig erwärmt und leichter Rückfluß einsetzt. Nach zwei Stunden ist die Reaktion beendet, worauf anorganische Salze in ca. einem Liter Wasser gelöst und abgetrennt werden. Man wäscht 2 mal mit je 200 ml Wasser und destilliert unter Zusatz von $NaHCO_3$ bei 2 hPa ohne zu fraktionieren. Es lassen sich insgesamt 1100 g leicht gelbes Destillat gewinnen, dessen Viskosität bei 7,0 mm$^2$/s liegt. Das Produkt entspricht einer homologen Reihe asymmetrisch veretherter oligo-Ethylenglycole der durchschnittlichen Formel $(C_4H_3O)CH_2O(CH_2CH_2O)_{2,75}CH_2CH=CH_2$. Im GPC-Spektrum kann der Triglycolallylfurfurylether als häufigstes Individuum der homologen Reihe identifiziert werden. Es werden 86 % der eingesetzten Furanylgruppen destillativ wieder gewonnen; der Allylierungsgrad liegt über 97 %.

Im folgenden soll die Abkürzung equ. für Equivalent stehen.

**Beispiel 1**

158 g Allylfurfurylether, dessen Herstellung oben unter A) beschrieben ist, werden mit 8 mg Platin in Form einer 50%igen Lösung von Platin-1,3-divinyl-1,1,3,3-tetramethyldisiloxan-Komplex in überschüssigem Komplexligand versetzt. Nach Zugabe von 0,5 g $NaHCO_3$ dosiert man unter Stickstoffatmosphäre bei 85°C in ca. zwei Stunden insgesamt 270 g eines Equilibrats aus Trimethylsiloxy-, Dimethylsiloxy- und Hydrogenmethylsiloxyeinheiten mit einer Viskosität von 91 mm$^2$/s zu, dessen Gehalt an Si-gebundenem Wasserstoff 0,37 Gew.-% beträgt. Nach weiteren drei Stunden bei 83°C sind mehr als 99 % der Si-H-Gruppen verbraucht. Das Reaktionsgemisch wird bei 120°C/3 hPa von flüchtigen Bestandteilen befreit und filtriert. Man erhält ein klares Öl der Viskosität 290 mm$^2$/s, das ca. 180 mequ. Furanylgruppen pro 100 g enthält.

**Beispiel 2**

Die in Beispiel 1 beschriebene Verfahrensweise wird wiederholt mit der Abänderung, daß anstelle des in Beispiel 1 beschriebenen Equilibrats 636 g eines Siloxanpolymers aus Hydrogendimethylsiloxy-, Hydrogenmethylsiloxy- und Dimethylsiloxyeinheiten mit einem Gehalt an Si-gebundenem Wasserstoff von 0,157 Gew.-% und einer Viskosität von 135 mm$^2$/s zum katalysierten Allylfurfurylether zudosiert wird. Nach gleicher Reaktionszeit und Aufarbeitung bei 120°C/ 3 hPa erhält man ein klares, hellgelbes Öl mit der Viskosität 700 mm$^2$/s. Aus dem $^1$H-NMR-Spektrum ist zu entnehmen, daß das Produkt ein Furanylequivalentgewicht von ca. 1000 g hat. Die Protonenresonanzen des Furanrings liegen bei

$\delta$ = 7,38; 6,31; 6,27 ppm und die entstandenen $SiCH_2$-Gruppe bei $\delta$ = 0,50 ppm.

**Beispiel 3**

Die in Beispiel 1 beschriebene Verfahrensweise wird wiederholt mit der Abänderung, daß anstelle des in Beispiel 1 beschriebenen Equilibrats 2130 g eines Siloxanpolymers, aufgebaut aus Trimethylsiloxy-, Dimethylsiloxy- und Hydrogenmethylsiloxyeinheiten, mit 0,047 Gew.-% Si-gebundenem Wasserund einer Viskosität von 90 $mm^2/s$ zum katalysierten Allylfurfurylether zudosiert wird. Nach Entfernen flüchtiger Bestandteile bei 120°C/3 hPa und Filtration erhält man ein klares, helles Öl der Viskosität 144 $mm^2/s$, das in 100 g ca. 35 mequ. Furanylgruppen enthält.

**Beispiel 4**

20,4 g Polyglycolallylmethylether mit durchschnittlichem Polymerisationsgrad von 4,5 werden zusammen mit 36 g Allylfurfurylether vorgelegt. Es werden 0,5 ml einer 0,1-n Lösung von KOH in Ethanol sowie 30 g Xylol zugegeben. Nach Zusatz von 4,5 mg Platin in Form einer 50%igen Lösung von Platin-1,3-divinyl-1,1,3,3-tetramethyldisiloxan-Komplex in überschüssigem Komplexligand wird unter Stickstoffatmosphäre auf 110°C erwärmt und 159 g eines Siloxanpolymers aus Hydrogendimethylsiloxy-, Hydrogenmethylsiloxy- und Dimethylsiloxyeinheiten mit einem Gehalt an Si-gebundenem Wasserstoff von 0,157 Gew.-% und einer Viskosität von 135 $mm^2/s$ zudosiert. Nach weiteren zwei Stunden bei gleicher Temperatur ist die Additionsreaktion beendet, das Lösungsmittel und überschüssiger Ether wird bei einem Druck von 5 hPa entfernt. Man erhält ein schwach gefärbtes Öl mit 420 $mm^2/s$, das in 100 g ca. 75 mequ. Furanylgruppen enthält und zusätzlich 0,17 equ. Ethoxyleinheiten.

**Beispiel 5**

59 g des oben unter B) hergestellten Polyethylenglycolallylfurfurylethers der durchschnittlichen Formel $(C_4H_3O)CH_2O(CH_2CH_2O)_{2,75}CH_2CH{=}CH_2$ werden mit 45 ml Xylol verdünnt. Man gibt 5 mg Platin in Form einer 50%igen Lösung von Platin-1,3-divinyl-1,1,3,3-tetramethyldisiloxan-Komplex in überschüssigem Komplexligand hinzu und temperiert unter Stickstoffatmosphäre auf ca. 110°C. Über eine Stunde verteilt werden insgesamt 95 g eines linearen $\alpha,\omega$-Dihydrogendimethylpolysiloxans mit einem Gehalt an 0,21 % Si-gebundenem Wasserstoff zudosiert. Nach vollständigem Umsatz (nach ca. 4 h) werden Lösungsmittel und flüchtige Anteile bei 120°C/3 hPa entfernt. Man erhält ein dünnflüssiges, gelbliches Öl mit 36 $mm^2/s$ Viskosität. Entsprechend dem $^1H$-NMR-Spektrum enthält das Produkt pro kg 1,4 equ. Furanylgruppen und rund 3,7 equ. Ethoxyleinheiten. Der Siloxangehalt des Polymers liegt bei 65 Gew.-%.

**Beispiel 6**

Bei Raumtemperatur werden 63 g des oben unter B) hergestellten Polyethylenglycolallylfurfurylethers mit 50 ml Xylol und 172 g eines Siloxanpolymers der Viskosität von 33 $mm^2/s$ vermischt. Das Siloxan besteht aus Trimethylsilyl-, Dimethylsilyl- und Hydrogendimethylsilyleinheiten und hat einen Gehalt an Si-gebundenem Wasserstoff von 0,116 %. Man erwärmt unter Inertgas auf ca. 100°C und gibt zu der stark gerührten Mischung 3 mg Platin in Form einer 50%igen Lösung von Platin-1,3-divinyl-1,1,3,3-tetramethyldisiloxan-Komplex in überschüssigem Komplexligand. Die Additionsreaktion ist nach 3 Stunden beendet. Das Lösungsmittel wird bei 120°C/3 hPa entfernt, worauf ein gelbes Öl mit 91 $mm^2/s$ Viskosität zurückbleibt. Die $^1H$-NMR-Analytik ergibt pro kg Polymer 0,8 equ. Furaneinheiten und ca. 2,3 equ. Ethoxyleinheiten mit einem Siloxangehalt von 77 Gew.-%.

**Beispiel 7**

Das in Beispiel 6 erhaltene Furanylgruppen aufweisende Organopolysiloxan wird mit 2 %, bezogen auf das Gewicht des Siloxans, einer 50 %igen Lösung von Bis(4-dodecylphenyl)iodoniumhexafluoroantimonat in Toluol vermischt und in einer Schichtdicke von ca. 4 $\mu$m auf Polyethylenfolie aufgetragen. UV-angeregte Aushärtung dieser Beschichtung erfolgt mit einer Quecksilbermitteldrucklampe (80 W/cm) im Abstand von 10 cm während 0,3 Sekunden. Die erfindungsgemäße Zusammensetzung ist zu einer festen, klebfreien Beschichtung vernetzt.

**Patentansprüche**

**1.** Durch Licht vernetzbare Zusammensetzungen enthaltend

(A) Furanylgruppen aufweisende Organosiliciumverbindungen, die Einheiten der allgemeinen Formel

$$A_cR_aSi(OR^1)_bO_{\frac{4-a-b-c}{2}} \qquad (I)$$

enthalten, wobei

R gleich oder verschieden sein kann und Wasserstoffatom oder einwertiger, SiC-gebundener, gegebenenfalls halogenierter Kohlenwasserstoffrest mit 1 bis 26 Kohlenstoffatomen ausgewählt aus der Gruppe der Alkylreste, Cycloalkylreste, Arylreste, Alkarylreste,Aralkylreste, Halogenalkylreste und Halogenarylreste, der durch 1 bis 12 separate Sauerstoffatome unterbrochen sein kann, bedeutet,

$R^1$ gleich oder verschieden sein kann und einen Kohlenwasserstoffrest mit 1 bis 8 Kohlenstoffatomen, der durch 1 bis 3 Sauerstoffatome unterbrochen sein kann, bedeutet,

A gleich oder verschieden sein kann und SiC-gebundener Furanylrest der allgemeinen Formel

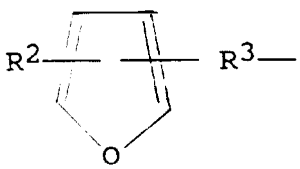

(II)

bedeutet, wobei $R^2$ Wasserstoff oder einen einwertigen, aliphatisch gesättigten, gegebenenfalls halogenierten Kohlenwasserstoffrest mit 1 bis 26 Kohlenstoffatomen, der durch 1 bis 12 separate Sauerstoffatome unterbrochen sein kann, bedeutet und

$R^3$ Reste der Formel ausgewählt aus der Gruppe der Formeln
$*\text{-}CH_2OCH_2CH_2\text{-}$, $*\text{-}CH_2O(CH_2)_3\text{-}$, $*\text{-}CH_2O(CH_2)_6\text{-}$, $*\text{-}CH_2O(C_2H_4O)_n(CH_2)_3\text{-}$ (n=1-10),
$*\text{-}CH_2O(C_3H_6O)_n(CH_2)_3\text{-}$ (n=1-10),

$$*\text{-}CH_2O\overset{O}{\overset{\|}{C}}(CH_2)_2\text{-},\quad *\text{-}CH_2O\overset{O}{\overset{\|}{C}}O(CH_2)_3\text{-},$$

$$*\text{-}CH_2O(C_2H_4O)_{n'}\overset{O}{\overset{\|}{C}}(CH_2)_2\text{-}\quad (n'=1\text{-}5),$$

$$*\text{-}CH_2O(C_2H_4O)_{n'}\overset{O}{\overset{\|}{C}}O(CH_2)_3\text{-}\quad (n'=1\text{-}5),$$

$*\text{-}CH_2OCH(CH_3)\text{-}O(C_2H_4O)_n(CH_2)_m\text{-}$ (n=1-10, m = 2 oder 3) und
$*\text{-}CH_2OCH(C_2H_5)\text{-}O(C_2H_4O)_n(CH_2)_m\text{-}$ (n=1-10, m = 2 oder 3),

wobei jeweils die mit * markierte Seite des Restes mit dem Furanring verbunden ist, sind,

a 0, 1, 2 oder 3 ist,
b 0, 1 oder 2 ist und
c 0, 1 oder 2 ist,

mit der Maßgabe, daß die Summe a+b+c kleiner oder gleich 3 ist und die Organosiliciumverbindung pro Molekül mindestens einen Rest A aufweist und

(B) Oniumsalze, ausgewählt aus der Gruppe der Diaryljodoniumsalze und Triarylsulfoniumsalze.

**2.** Zusammensetzungen gemäß Anspruch 1, dadurch gekennzeichnet, daß c in den (A) Furanylgruppen aufweisenden Organosiliciumverbindungen den Wert 0 oder 1 hat.

**3.** Zusammensetzungen gemäß Anspruch 1 oder 2, dadurch gekennzeichnet, daß die

(A) Furanylgruppen aufweisenden Organosiliciumverbindungen solche der Formel

$$A_dR_{3-d}SiO(SiR_2O)_o(SiRAO)_pSiR_{3-d}A_d \qquad \text{(III)}$$

sind, wobei

A die im Anspruch 1 dafür angegebene Bedeutung hat,
R die in Formel (I) angegebene Bedeutung hat ausgenommen Wasserstoffatom,
d gleich oder verschieden sein kann und 0 oder 1 ist,
o eine ganze Zahl von 1 bis 1000 ist und
p 0 oder eine ganze Zahl von 1 bis 100 bedeutet,

mit der Maßgabe, daß die Organosiliciumverbindung der Formel (III) pro Molekül mindestens einen Rest A aufweist.

**4.** Verfahren zur Herstellung von Überzügen, dadurch gekennzeichnet, daß durch Licht vernetzbare Zusammensetzungen gemäß einem der Ansprüche 1 bis 3 auf eine Oberfläche aufgebracht und vernetzen gelassen werden.

**5.** Furanylgruppen aufweisende Organosiliciumverbindungen, die Einheiten der allgemeinen Formel

$$A_cR_aSi(OR^1)_bO_{\frac{4-a-b-c}{2}} \qquad \text{(I)}$$

enthalten, wobei

R gleich oder verschieden sein kann und Wasserstoffatom oder einwertiger, SiC-gebundener, gegebenenfalls halogenierter Kohlenwasserstoffrest mit 1 bis 26 Kohlenstoffatomen ausgewählt aus der Gruppe der Alkylreste, Cycloalkylreste, Arylreste, Alkarylreste, Aralkylreste, Halogenalkylreste und Halogenarylreste, der durch 1 bis 12 separate Sauerstoffatome unterbrochen sein kann, bedeutet,
$R^1$ gleich oder verschieden sein kann und einen Kohlenwasserstoffrest mit 1 bis 8 Kohlenstoffatomen, der durch 1 bis 3 Sauerstoffatome unterbrochen sein kann, bedeutet,
A gleich oder verschieden sein kann und SiC-gebundener Furanylrest der allgemeinen Formel

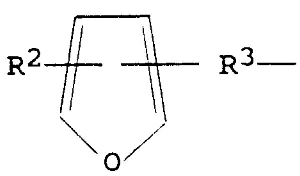

(II)

bedeutet, wobei $R^2$ Wasserstoff oder einen einwertigen, aliphatisch gesättigten, gegebenenfalls halogenierten Kohlenwasserstoffrest mit 1 bis 26 Kohlenstoffatomen, der durch 1 bis 12 separate Sauerstoffatome unterbrochen sein kann, bedeutet und
$R^3$ Reste der Formel ausgewählt aus der Gruppe der Formeln
$*\text{-}CH_2OCH_2CH_2\text{-}$, $*\text{-}CH_2O(CH_2)_3\text{-}$, $*\text{-}CH_2O(CH_2)_6\text{-}$,
$*\text{-}CH_2O(C_2H_4O)_n(CH_2)_3\text{-}$ (n=1-10),
$*\text{-}CH_2O(C_3H_6O)_n(CH_2)_3\text{-}$ (n=1-10),

$$*\text{-}CH_2O\overset{O}{\overset{\|}{C}}(CH_2)_2\text{-}, \quad *\text{-}CH_2O\overset{O}{\overset{\|}{C}}O(CH_2)_3\text{-},$$

$$*\text{-}CH_2O(C_2H_4O)_{n'}\overset{O}{\overset{\|}{C}}(CH_2)_2\text{-} \quad (n'=1\text{-}5),$$

$$*-CH_2O(C_2H_4O)_{n'}\overset{O}{\overset{\|}{C}}O(CH_2)_3- \quad (n'=1-5),$$

$*-CH_2OCH(CH_3)-O(C_2H_4O)_n(CH_2)_m-$ (n=1-10, m = 2 oder 3) und
$*-CH_2OCH(C_2H_5)-O(C_2H_4O)_n(CH_2)_m-$ (n=1-10, m = 2 oder 3),

wobei jeweils die mit * markierte Seite des Restes mit dem Furanring verbunden ist, sind,

a 0, 1, 2 oder 3 ist,
b 0, 1 oder 2 ist und
c 0, 1 oder 2 ist,

mit der Maßgabe, daß die Summe a+b+c kleiner oder gleich 3 ist und die Organosiliciumverbindung pro Molekül mindestens einen Rest A aufweist.

**6.** Verfahren zur Herstellung von Furanylgruppen aufweisenden Organosiliciumverbindungen gemäß Anspruch 5, dadurch gekennzeichnet, daß eine Furanylverbindung (1) der Formel

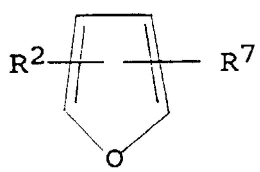

(VII)

worin $R^2$ die im Anspruch 5 angegebene Bedeutung hat und $R^7$ einen einwertigen Kohlenwasserstoffrest mit endständiger Kohlenstoff-Kohlenstoff-Mehrfachbindung der Formel ausgewählt aus der Gruppe der Formeln $-CH_2OCH=CH_2$, $-CH_2OCH_2CH=CH_2$, $-CH_2O(CH_2)_4CH=CH_2$, $-CH_2O(C_2H_4O)_nCH_2CH=CH_2$ (n=1-10), $-CH_2O(C_3H_6O)_nCH_2CH=CH_2$ (n=1-10),

$$-CH_2O\overset{O}{\overset{\|}{C}}CH=CH_2, \quad -CH_2O\overset{O}{\overset{\|}{C}}OCH_2CH=CH_2,$$

$$-CH_2O(C_2H_4O)_{n'}\overset{O}{\overset{\|}{C}}CH=CH_2 \quad (n'=1-5),$$

$$-CH_2O(C_2H_4O)_{n'}\overset{O}{\overset{\|}{C}}OCH_2CH=CH_2 \quad (n'=1-5),$$

$-CH_2OCH(CH_3)-O(C_2H_4O)_nCH=CH_2$ (n=1-10, m = 2 oder 3) und $-CH_2OCH(C_2H_5)-O(C_2H_4O)_nCH=CH_2$ (n=1-10, m = 2 oder 3), bedeutet, mit Organosiliciumverbindung (2), die Einheiten der allgemeinen Formel

$$H_cR_aSi(OR^1)_bO_{\frac{4-a-b-c}{2}} \qquad (IV)$$

enthält, wobei

R die in Formel (I) dafür angegebene Bedeutung hat ausgenommen Wasserstoffatom,
$R^1$, a, b und c die in Anspruch 5 dafür angegebenen Bedeutungen haben,

mit der Maßgabe, daß die Summe a+b+c kleiner oder gleich 3 ist und die Organosiliciumverbindung (2) pro Molekül mindestens ein Si-gebundenes Wasserstoffatom aufweist, umgesetzt wird.

**Claims**

1. Composition which can be crosslinked by light containing (A) organosilicon compounds containing furanyl groups which contain units of the general formula

$$A_cR_aSi(OR^1)_bO_{\frac{4-a-b-c}{2}} \qquad (I)$$

in which

R can be identical or different and is a hydrogen atom or a monovalent, SiC-bonded, optionally halogenated hydrocarbon radical having 1 to 26 carbon atoms selected from the group consisting of the alkyl radicals, cycloalkyl radicals, aryl radicals, alkaryl radicals, aralkyl radicals, haloalkyl radicals and haloaryl radicals, which can be interrupted by 1 to 12 separate oxygen atoms,

$R^1$ can be identical or different and is a hydrocarbon radical having 1 to 8 carbon atoms, which can be interrupted by 1 to 3 oxygen atoms,

A can be identical or different and is an SiC-bonded furanyl radical of the general formula

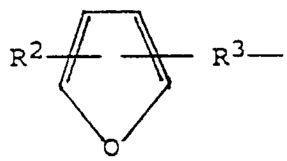

(II)

where $R^2$ is hydrogen or a monovalent, aliphatically saturated, optionally halogenated hydrocarbon radical having 1 to 26 carbon atoms, which can be interrupted by 1 to 12 separate oxygen atoms, and $R^3$ are radicals of the formula selected from the group of the formulae

$*-CH_2OCH_2CH_2-$, $*-CH_2O(CH_2)_3-$, $*-CH_2O(CH_2)_6-$,
$*-CH_2O(C_2H_4O)_n(CH_2)_3-$ (n=1-10),
$*-CH_2O(C_3H_6O)_n(CH_2)_3-$ (n=1-10),

$$*-CH_2O\overset{O}{\overset{\|}{C}}(CH_2)_2-,\quad *-CH_2O\overset{O}{\overset{\|}{C}}O(CH_2)_3-,$$

$$*-CH_2O(C_2H_4O)_{n'}\overset{O}{\overset{\|}{C}}(CH_2)_2- \quad (n'=1-5),$$

$$*-CH_2O(C_2H_4O)_{n'}\overset{O}{\overset{\|}{C}}O(CH_2)_3- \quad (n'=1-5),$$

$*-CH_2OCH(CH_3)-O(C_2H_4O)_n(CH_2)_m-$ (n=1-10, m = 2 or 3) and
$*CH_2OCH(C_2H_5)-O(C_2H_4O)_n(CH_2)_m-$ (n=1-10, m = 2 or 3)

in which in each case the side of the radical marked with * is bonded to the furan ring,

a is 0, 1, 2 or 3,
b is 0, 1 or 2 and
c is 0, 1 or 2,

with the proviso that the sum a+b+c is less than or equal to 3 and the organosilicon compound contains at least one radical A per molecule, and
(B) onium salts selected from the group consisting of the diaryliodonium salts and triarylsuphonium salts

**2.** Composition according to Claim 1, characterized in that c in the organosilicon compounds (A) containing furanyl groups has the value 0 or 1.

**3.** Composition according to Claim 1 or 2, characterized in that the

(A) organosilicon compounds containing furanyl groups are those of the formula

$$A_dR_{3-d}SiO(SiR_2O)_o(SiRAO)_pSiR_{3-d}A_d \qquad (III),$$

in which

A has the meaning given in Claim 1 for this radical,
R has the meaning given in formula (I), with the exception of the hydrogen atom,
d can be identical or different and is 0 or 1,
o is an integer from 1 to 1000 and
p is 0 or an integer from 1 to 100,

with the proviso that the organosilicon compound of the formula (III) contains at least one radical A per molecule.

**4.** Process for the production of a coating, characterized in that a composition which can be crosslinked according to one of Claims 1 to 3 is applied by light to a surface and caused to crosslink.

**5.** Organosilicon compound containing furanyl groups which contains units of the general formula

$$A_cR_aSi(OR^1)_bO_{\frac{4-a-b-c}{2}} \qquad (I)$$

in which

R can be identical or different and is a hydrogen atom or a monovalent, SiC-bonded, optionally halogenated hydrocarbon radical having 1 to 26 carbon atoms selected from the group consisting of the alkyl radicals, cycloalkyl radicals, aryl radicals, alkaryl radicals, aralkyl radicals, haloalkyl radicals and haloaryl radicals, which can be interrupted by 1 to 12 separate oxygen atoms,
$R^1$ can be identical or different and is a hydrocarbon radical having 1 to 8 carbon atoms, which can be interrupted by 1 to 3 oxygen atoms,
A can be identical or different and is an SiC-bonded furanyl radical of the general formula

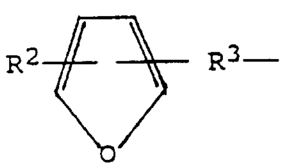

(II)

where $R^2$ is hydrogen or a monovalent, aliphatically saturated, optionally halogenated hydrocarbon radical having 1 to 26 carbon atoms, which can be interrupted by 1 to 12 separate oxygen atoms, and $R^3$ are radicals of the formula selected from the group of the formulae
$*-CH_2OCH_2CH_2-$, $*-CH_2O(CH_2)_3-$, $*-CH_2O(CH_2)_6-$, $*-CH_2O(C_2H_4O)_n(CH_2)_3-$ (n=1-10), $*-CH_2O(C_3H_6O)_n(CH_2)_3-$ (n=1-10),

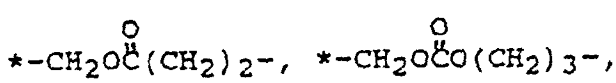

$$*\text{-}CH_2O(C_2H_4O)_{n'}\overset{O}{\overset{\|}{C}}(CH_2)_2\text{-} \quad (n'=1\text{-}5),$$

$$*\text{-}CH_2O(C_2H_4O)_{n'}\overset{O}{\overset{\|}{C}}O(CH_2)_3\text{-} \quad (n'=1\text{-}5),$$

$*\text{-}CH_2OCH(CH_3)\text{-}O(C_2H_4O)_n(CH_2)_m\text{-}$ (n=1-10, m = 2 or 3) and
$*CH_2OCH(C_2H_5)\text{-}O(C_2H_4O)_n(CH_2)_m\text{-}$ (n=1-10, m = 2 or 3),

in which in each case the side of the radical marked with * is bonded to the furan ring,

a is 0, 1, 2 or 3,
b is 0, 1 or 2 and
c is 0, 1 or 2,

with the proviso that the sum a+b+c is less than or equal to 3 and the organosilicon compound contains at least one radical A per molecule, and
(B) onium salts selected from the group consisting of the diaryliodonium salts and triarylsuphonium salts.

**6.** Process for the preparation of an organosilicon compound containing furanyl groups according to Claim 5, characterized in that a furanyl compound (1) of the formula

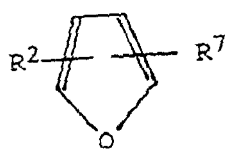

(VII),

in which $R^2$ has the meaning given in Claim 5 and $R^7$ is a monovalent hydrocarbon radical having a terminal carbon-carbon multiple bond of the formula selected from the group of the formulae
$-CH_2OCH=CH_2$, $-CH_2OCH_2CH=CH_2$, $-CH_2O(CH_2)_4CH=CH_2$, $-CH_2O(C_2H_4O)_nCH_2CH=CH_2$ (n=1-10), $-CH_2O(C_3H_6O)_nCH_2CH=CH_2$ (n=1-10),

$$-CH_2O\overset{O}{\overset{\|}{C}}CH=CH_2, \quad -CH_2O\overset{O}{\overset{\|}{C}}OCH_2CH=CH_2,$$

$$-CH_2O(C_2H_4O)_{n'}\overset{O}{\overset{\|}{C}}CH=CH_2 \quad (n'=1\text{-}5),$$

$$-CH_2O(C_2H_4O)_{n'}\overset{O}{\overset{\|}{C}}OCH_2CH=CH_2 \quad (n'=1\text{-}5),$$

$-CH_2OCH(CH_3)\text{-}O(C_2H_4O)_nCH\text{-}CH_2$ (n=1-10, m = 2 or 3) and $-CH_2OCH(C_2H_5)\text{-}O(C_2H_4O)_nCH=CH_2$(n=1-10, m = 2 or 3),
is reacted with organosilicon compound (2) which contains units of the general formula

$$H_cR_aSi(OR^1)_bO_{\frac{4-a-b-c}{2}} \qquad (IV)$$

in which

R has the meaning given for this radical in formula (I) with the exception of the hydrogen atom, and $R^1$, a, b and c have the meanings given in Claim 5 for these symbols,

with the proviso that the sum a+b+c is less than or equal to 3 and the organosilicon compound (2) contains at least one Si-bonded hydrogen atom per molecule.

**Revendications**

**1.** Compositions réticulables sous l'action de la lumière contenant (A) des composés organosiliciques présentant des groupements furannyle, qui contiennent des unités de formule générale

$$A_cR_aSi(OR^1)_bO_{\frac{4-a-b-c}{2}} \qquad (I)$$

R pouvant être identique ou différent et désignant un atome d'hydrogène ou un résidu d'hydrocarbure monovalent, lié au SiC, le cas échéant halogéné, ayant de 1 à 26 atomes de carbone, choisi parmi le groupe des résidus alkyle, des résidus cycloalkyle, des résidus aryle, des résidus alkaryle, des résidus aralkyle, des résidus halogénoalkyle et des résidus halogénoaryle, qui peut être interrompu par 1 à 12 atomes d'oxygène séparés,

$R^1$ pouvant être identique ou différent et désignant un résidu d'hydrocarbure ayant de 1 à 8 atomes de carbone, qui peut être interrompu par 1 à 3 atomes d'oxygène,

A pouvant être identique ou différent et désignant un résidu furannyle lié au SiC, de formule générale

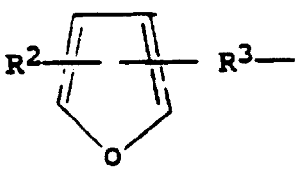

(II)

$R^2$ désignant un atome d'hydrogène ou un résidu d'hydrocarbure univalent, aliphatiquement saturé, le cas échéant halogéné, ayant de 1 à 26 atomes de carbone, qui peut être interrompu par 1 à 12 atomes d'oxygène séparés, et

$R^3$ étant des résidus de formule choisie parmi le groupe des formules
$*-CH_2OCH_2CH_2-$, $*-CH_2O(CH_2)_3-$, $*-CH_2O(CH_2)_6-$,
$*-CH_2O(C_2H_4O)_n(CH_2)_3-$ (n=1-10),
$*-CH_2O(C_3H_6O)_n(CH_2)_3-$ (n=1-10),

$$*-CH_2O\overset{O}{\overset{\parallel}{C}}(CH_2)_2-,\quad *-CH_2O\overset{O}{\overset{\parallel}{C}}O(CH_2)_3-,$$

$$*-CH_2O(C_2H_4O)_{n'}\overset{O}{\overset{\parallel}{C}}(CH_2)_2-\ (n'=1-5),$$

$$*-CH_2O(C_2H_4O)_{n'}\overset{O}{\overset{\parallel}{C}}O(CH_2)_3-\ (n'=1-5),$$

$*-CH_2OCH(CH_3)-O(C_2H_4O)_n(CH_2)_m-$ (n=1-10, m = 2 ou 3) et
$*-CH_2OCH(C_2H_5)-O(C_2H_4O)_n(CH_2)_m-$ (n=1-10, m = 2 ou 3),

le côté marqué par * du résidu étant lié à chaque fois au cycle furanne,

a étant 0, 1, 2 ou 3

b étant 0, 1 ou 2 et
c étant 0, 1 ou 2,

sous réserve que la somme a+b+c soit inférieure ou égale à 3 et que le composé organosilicique présente par molécule au moins un résidu A et
(B) des sels d'onium, choisis parmi le groupe des sels de diaryliodonium et des sels de triarylsulfonium.

**2.** Compositions selon la revendication 1, caractérisées en ce que c dans les composés organosiliciques présentant des groupements furannyle (A) a la valeur 0 ou 1.

**3.** Compositions selon la revendication 1 ou 2, caractérisées en ce que les composés organosiliciques présentant des groupements furannyle (A) sont ceux de formule

$$A_dR_{3-d}SiO(SiR_2O)_o(SiRAO)_pSiR_{3-d}A_d \qquad (III)$$

A ayant la signification indiquée dans ce but dans la revendication 1,
R ayant la signification indiquée dans la formule (I), à l'exception de l'atome d'hydrogène,
d pouvant être identique ou différent et étant 0 ou 1,
o étant un nombre entier de 1 à 1000 et
p désignant 0 ou un nombre entier de 1 à 100,

sous réserve que le composé organosilicique de la formule (III) présente au moins un résidu A par molécule.

**4.** Procédé en vue de la fabrication de revêtements, caractérisé en ce que l'on applique sur une surface des compositions réticulables sous l'action de la lumière conformément à l'une des revendications 1 à 3 et qu'on les laisse s'y réticuler.

**5.** Composés organosiliciques présentant des groupements furannyle, qui contiennent des unités de formule générale

$$A_cR_aSi(OR^1)_bO_{\frac{4-a-b-c}{2}} \qquad (I)$$

R pouvant être identique ou différent et désignant un atome d'hydrogène ou un résidu d'hydrocarbure univalent, lié au SiC, le cas échéant halogéné, ayant de 1 à 26 atomes de carbone, choisi parmi le groupe des résidus alkyle, des résidus cycloalkyle, des résidus aryle, des résidus alkaryle, des résidus aralkyle, des résidus halogénoalkyle et des résidus halogénoaryle, qui peut être interrompu par 1 à 12 atomes d'oxygène séparés,
$R^1$ pouvant être identique ou différent et désignant un résidu d'hydrocarbure ayant de 1 à 8 atomes de carbone, qui peut être interrompu par 1 à 3 atomes d'oxygène,
A pouvant être identique ou différent et désignant un résidu furannyle, lié au SiC, de formule générale

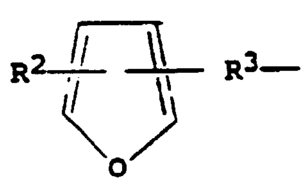

(II)

$R^2$ désignant un atome d'hydrogène ou un résidu d'hydrocarbure univalent, aliphatiquement saturé, le cas échéant halogéné, ayant de 1 à 26 atomes de carbone, qui peut être interrompu par 1 à 12 atomes d'oxygène séparés, et
$R^3$ étant des résidus de formule choisie parmi le groupe des formules
$*-CH_2OCH_2CH_2-$, $*-CH_2O(CH_2)_3-$, $*-CH_2O(CH_2)_6-$,
$*-CH_2O(C_2H_4O)_n(CH_2)_3-$ (n=1-10),

$*-CH_2O(C_3H_6O)_n(CH_2)_3-$ (n=1-10),

$$*-CH_2O\overset{O}{\overset{\|}{C}}(CH_2)_2-,\quad *-CH_2O\overset{O}{\overset{\|}{C}}O(CH_2)_3-,$$

$$*-CH_2O(C_2H_4O)_{n'}\overset{O}{\overset{\|}{C}}(CH_2)_2-\ (n'=1-5),$$

$$*-CH_2O(C_2H_4O)_{n'}\overset{O}{\overset{\|}{C}}O(CH_2)_3-\ (n'=1-5),$$

$*-CH_2OCH(CH_3)-O(C_2H_4O)_n(CH_2)_m-$ (n=1-10, m = 2 ou 3) et
$*-CH_2OCH(C_2H_5)-O(C_2H_4O)_n(CH_2)_m-$ (n=1-10, m = 2 ou 3),

le coté marqué par * du résidu étant lié à chaque fois au cycle furanne,

a étant 0, 1, 2 ou 3
b étant 0, 1 ou 2 et
c étant 0, 1 ou 2,

sous réserve que la somme a+b+c soit inférieure ou égale à 3 et que le composé organosilicique présente au moins un résidu A par molécule.

**6.** Procédé en vue de la fabrication de composés organosiliciques présentant des groupements furannyle selon la revendication 5, caractérisé en ce que l'on fait réagir un composé de furannyle (1) de formule

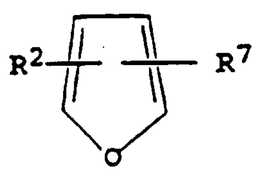

(VII)

$R^2$ ayant la signification indiquée dans la revendication 5 et $R^7$ désignant un résidu d'hydrocarbure univalent, ayant une liaison multiple carbone-carbone terminale, de formule choisie parmi le groupe des formules
$-CH_2OCH=CH_2$, $-CH_2OCH_2CH=CH_2$, $-CH_2O(CH_2)_4CH=CH_2$,
$-CH_2O(C_2H_4O)_nCH_2CH=CH_2$ (n=1-10), $-CH_2O(C_3H_6O)_nCH_2CH=CH_2$ (n=1-10),

$$-CH_2O\overset{O}{\overset{\|}{C}}CH=CH_2,\quad -CH_2O\overset{O}{\overset{\|}{C}}OCH_2CH=CH_2,$$

$$-CH_2O(C_2H_4O)_{n'}\overset{O}{\overset{\|}{C}}CH=CH_2\ (n'=1-5),$$

$$-CH_2O(C_2H_4O)_{n'}\overset{O}{\overset{\|}{C}}OCH_2CH=CH_2\ (n'=1-5),$$

$-CH_2OCH(CH_3)-O(C_2H_4O)_nCH=CH_2$ (n=1-10, m = 2 ou 3) et $-CH_2OCH(C_2H_5)-O(C_2H_4O)_nCH=CH_2$ (n=1-10, m = 2 ou 3),
avec un composé organosilicique (2), qui contient des unités de formule générale

$$H_cR_aSi(OR^1)_bO_{\frac{4-a-b-c}{2}} \quad (IV)$$

R ayant la signification indiquée dans ce but dans la formule (I), à l'exception de l'atome d'hydrogène,
$R^1$, a, b et c ayant les significations indiquées dans ce but dans la formule 5,

sous réserve que la somme a+b+c soit inférieure ou égale à 3 et que le composé organosilicique (2) présente au moins un atome d'hydrogène lié à Si par molécule.